(19) **Europäisches Patentamt**

**European Patent Office**

**Office européen des brevets**

(11) **EP 1 606 891 B1**

(12) **EUROPEAN PATENT SPECIFICATION**

(45) Date of publication and mention
of the grant of the patent:
**23.08.2006 Bulletin 2006/34**

(51) Int Cl.:
***H04B 7/005*** (2006.01)

(21) Application number: **03709483.6**

(86) International application number:
**PCT/CA2003/000420**

(22) Date of filing: **24.03.2003**

(87) International publication number:
**WO 2004/086649 (07.10.2004 Gazette 2004/41)**

(54) **METHOD AND SYSTEM FOR POWER CONTROL DURING THE TRAFFIC CHANNEL INITIALIZATION PERIOD IN A CDMA NETWORK**

VERFAHREN UND SYSTEM ZUR LEISTUNGSSTEUERUNG WÄHREND DER INITIALISIERUNGSPERIODE DES VERKEHRSKANALS IN EINEM CDMA NETZWERK

PROCEDE ET SYSTEME DE REGLAGE DE PUISSANCE LORS DE LA PERIODE D'INITIALISATION DE CANAL DE TRAFIC DANS UN RESEAU CDMA

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(43) Date of publication of application:
**21.12.2005 Bulletin 2005/51**

(73) Proprietor: **Research In Motion Limited Waterloo, Ontario N2L 3W8 (CA)**

(72) Inventors:
• **ZHAO, Wen**
  **Kanata, Ontario K2M 2S8 (CA)**
• **JIN, Xin**
  **Nepean, Ontario K2E 6J6 (CA)**

(74) Representative: **Rickard, David John**
  **26 Mallinson Road**
  **London SW11 1BP (GB)**

(56) References cited:
**WO-A-00/08706        WO-A-99/59262**
**US-A1- 2001 038 619        US-B1- 6 292 471**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to forward link power control in CDMA wireless networks, and more particularly relates to forward link power control during the traffic channel initialization period.

In current COMA wireless networks, mobile devices generally get access to the wireless networks through access channels in the reverse link, and the wireless network grants a mobile device access through paging channels. The mobile device and basestation then utilize a traffic channel to send and receive voice and/or data traffic.

When the mobile device first goes to the traffic channel, both the mobile device and the basestation usually start with preambles to become acquired and synchronized. The initial transmission power for the preamble from the mobile device is based on an open loop power control and the last successful access probe power level. Conversely, the initial transmission power level for the basestation is generally based on heuristic knowledge and is usually fixed at a predetermined value.

US 6,292,471 discloses a method for controlling the initial power at which signals to and from mobile end-user devices and a fixed base station should be transmitted.

US 6,173,162 describes methods of controlling the power levels of transmitted signals in telecommunication systems. A fast power control loop monitors a reference channel and adjusts transmit power in accordance with an SIR target value. A plurality of slow power control loops adjust the SIR target value and also provide offset transmit power values associated with each physical channel to adapt the transmit powers in accordance with varying quality requirements between radio bearers.

By using a predetermined value for the preamble transmission from the basestation, one of two problems can occur. If the power level is too low, the mobile device can fail to acquire the preambles transmitted by the basestation. Too low power can, for example, be caused by fading or territorial variations; narrow band interference (e.g. AMPS) seen in adjacent channels in the forward link or in neighboring cell/sectors; or an unbalanced RF link in some areas that cannot be fully optimized by network planning and optimization. The power level being too low leads to network access failure, and leads the mobile device to declare that the call cannot be successfully established.

In order to alleviate the above problems, the basestation usually sets the initial traffic channel transmit power to a relatively high level. This leads to the second problem, which is the loss of network capacity. By using high power

The present method and system seek to overcome the above problems by having the mobile device report to the basestation the received signal to noise ratio of a basestation transmitted signal. Based on the value of this received signal to noise ratio the basestation can adjust the power of the preamble in the traffic channel, thereby ensuring that the power level is optimal on a per user basis.

In a preferred embodiment the signal to noise ratio is measured from a known signal component, where the signal component measured is preferably the pilot signal from the basestation and the said signal to noise ratio is preferably expressed as the Ec/lo of the pilot channel, i.e., the energy per chip to the interference density ratio.

In accordance with the present invention, a method of controlling the transmit power of a forward link between a base station and a mobile device in a communication network, as set forth in claim 1, and a corresponding system, as set forth in claim 17, are provided.

**BRIEF DESCRIPTION OF THE DRAWINGS**

The present invention is better illustrated in the drawings, in which:

Figure 1 is a schematic view of the method of the present invention; and
Figure 2 is a schematic view of the system of the present invention.

**DESCRIPTION OF PREFERRED EMBODIMENTS**

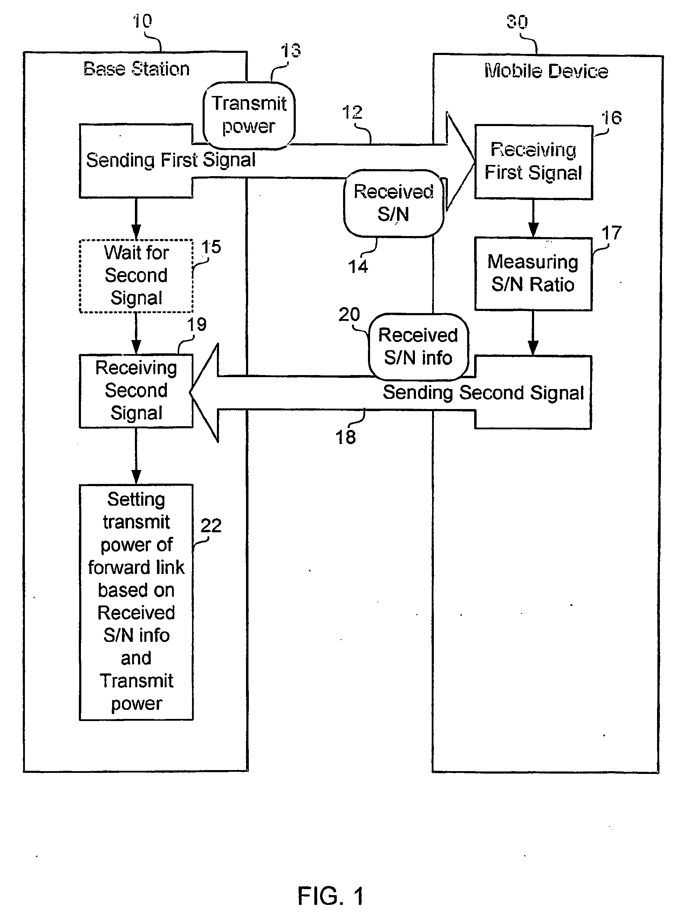

Reference is now made to Figure 1. During the traffic channel initialization period, a basestation 10 and mobile device 30 send a sequence of a known pattern such as zeros in a traffic channel to each other as a preamble in order to get acquired and synchronized. The transmit power of the preamble from the basestation 10 to the mobile device 30 needs to be sufficiently high to ensure the mobile device receives and can correctly acquire the signal, but cannot be too high or network capacity is reduced.

Basestation 10 broadcasts a first signal 12 to any mobile device 30 within its transmission area. The basestation 10 knows the transmit power 13 of this first signal 12. Once this first signal is sent, the basestation waits in waiting step 15 for a second signal to be recieved.

When the mobile device 30 accesses the wireless network, it receives the first signal 12 from the basestation 10 in receiving step 16. In the present invention the mobile device 30 then evaluates the signal to noise ratio 14 of a given signal component of this received first signal 12 in measuring step 17 and sends this information 20 to the basestation 10. The signal component can be any component the base station 10 knows the level of, and in a preferred embodiment the signal component is the pilot channel. The evaluated information 20 is the signal to noise ratio or signal to interference or any other quantity that is proportional to the said ratio, e.g., the energy per chip to the interference density, i.e., the Ec/Io, of the pilot channel. This information can also be expressed in logarithmic scale format, e.g., in dB, or a form proportional to it.

The report for the signal to noise ratio can be sent from the mobile device 30 to the basestation 10 through a second signal 18, which is any reverse channel message received by receiving second signal step 19 at the basestation 10. Preferably, however, this report is sent through access channel signaling messages in order to provide the basestation 10 with the received signal to noise ratio prior to any traffic channel messages being sent.

Once the basestation 10 receives the report from the mobile station 30, it performs a setting step 22 to adjust its initial forward link preamble transmit power according to the reported signal to noise ratio 20 at the mobile device 30. In this way the transmit power of the preamble is optimized to the current network conditions including interference, fading or unbalanced RF links, particularly for the intended mobile device.

In the preferred embodiment where the measured signal to noise ratio is measured based on the Ec/Io of the pilot channel, the transmit power of the forward link preamble can be set according to the following formula:

$$\text{initial\_preamble\_pwr} = \text{pilot\_pwr} + (\text{desired\_preamble\_Eclo} - \text{pilot\_Eclo}) + \text{delta}$$

where:

> initial_preamble_pwr is the transmitted power value for the targeted receiver in dBm (or in dB relative to a given reference);
> pilot_pwr is the basestation transmitted pilot power in dBm (or in dB relative to a given reference);
> desired_preamble_Eclo is the desired value of preamble Ec/Io in dB seen at the mobile device that is optimized for network performance criteria (for example, it is the lowest possible Ec/Io value at which receivers in the network can successfully acquire the preamble with sufficiently high probability);
> pilot_Eclo is the pilot Ec/Io value in dB that the mobile device has estimated and reported to the base station during access to the network; and
> delta is an offset parameter in dB whose value can be chose by the operator of the wireless network to optimize the initial_preamble_pwr according to the operater's network optimization policy, including accounting for the estimation error of the pilot_Eclo and possible channel condition changes since the mobile reports the pilot_Eclo, where in most cases a value of zero can be used, and usually is within the range of 0 to 6 dB.

Alternatively, in the above formula the initial_preamble_pwr and the pilot_pwr can be interpreted as gains in dB that are used in the basestation 10 transmitter to control corresponding signal components, i.e. the preamble and the pilot.

The application of the above formula thus allows the basestation 10 to adjust the power of the preamble in the traffic channel based on data on a signal 12 received by a mobile device 10, thereby ensuring that the power level is optimal and eliminating the need for heuristic settings for the power level.

In an alternative embodiment, the desired_preamble_Eclo may be replaced by a desired_preamble_Eclo_by_mobile, which is the preamble Eclo that the mobile device 30 prefers. The reason for using the alternative value is that different manufacturers, or even different devices made by the same manufacturer, use different signal processing algorithms, and the capability of acquiring these signals may be different for different types of mobile devices 30. It is therefore desirable to have the individual mobile device 30 report its desired preamble Eclo. In this embodiment the desired_preamble_Eclo_by_mobile is preferably reported through the same signal 18 used to report the pilot_Eclo.

Once the basestation 10 receives the desired_preamble_Eclo_by_mobile it can either use this value or the predetermined desired_preamble_Eclo in the above formula. The selection may be determined by the function:

$$\text{If desired\_preamble\_Eclo\_by\_mobile} > \text{desired\_preamble\_Eclo}$$

$$\text{then use desired\_preamble\_Eclo\_by\_mobile,}$$

$$\text{otherwise use desired\_preamble\_Eclo}$$

The above function is biased to obtain a better rate of successfully acquiring the signal. A built in check is also possible, where if the desired_preamble_Eclo_by_mobile is too high to accept, it is treated as an illegal value and a maximum acceptable value is instead used by the basestation.

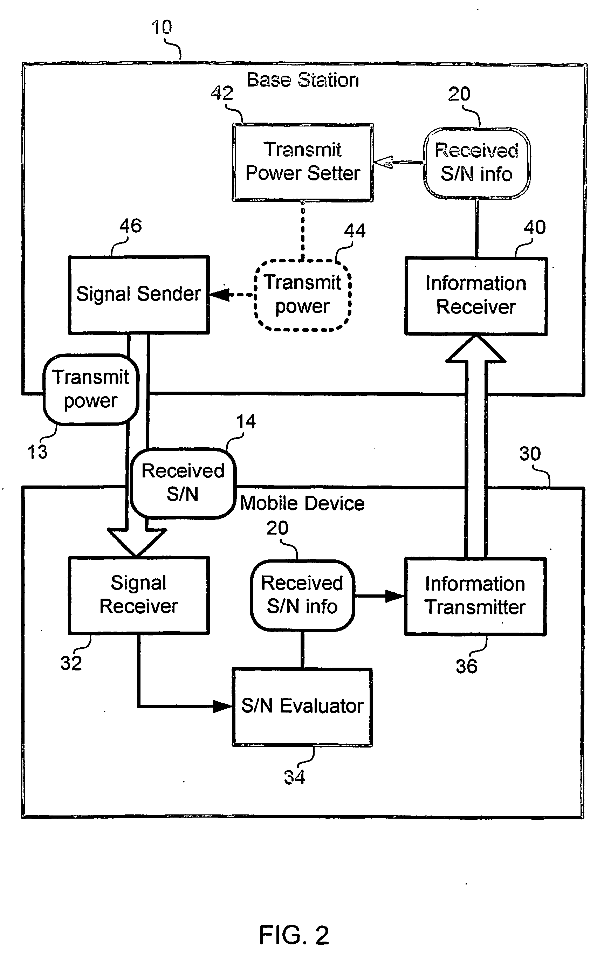

Reference is now made to Figure 2. A system for implementing the above includes a mobile device 30 that is adapted to receive a signal component such as the pilot channel at a signal receiver 32 and to evaluate the signal to noise ratio 14 of this signal component at signal to noise ratio evaluator 34. The mobile device 30 can then send this information 20 using information transmitter 36 to a basestation 10.

The basestation 10 is adapted to receive the information 20 from mobile device 30 at information receiver 40 and to set the transmit power of the preamble for mobile device 10 at power setter 42 to a level 44 based on the received signal to noise ratio. The preamble is transmitted in a traffic channel using signal sender 46, and the power level corresponds to the pilot signal power adjusted based on the above formula.

While the present invention contemplates preamble power control in a CDMA network, one skilled in the art will realize that the present method and system can be used in other types of networks and for signals other than the preamble.

The above-described embodiments of the present invention are meant to be illustrative of preferred embodiments and are not intended to limit the scope of the present invention. Also, various modifications, which would be readily apparent to one skilled in the art, are intended to be within the scope of the present invention. The only limitations to the scope of the present invention are set forth in the following claims appended hereto.

**Claims**

1. A method of controlling the transmit power of a forward link signal between a base station (10) and a mobile device (30) in a communications network, said method comprising the steps of:

   sending (12) a first signal from the base station to the mobile device, said first signal having a first signal transmit power;
   receiving (16) said first signal at the mobile device;
   measuring (17) a received signal to noise ratio for said first signal at the mobile device;
   sending (18) a second signal from the mobile device to the base station, said second signal containing information about said received signal to noise ratio; said method being **characterized in**
   setting (22) the transmit power of the forward link signal based on said received signal to noise ratio information and said first signal transmit power, the
   setting step further comprising:

   estimating a signal component value based on said received signal to noise ratio;
   calculating the difference between a desired signal component value and said estimated signal component value; and
   assigning the transmit power of said forward link signal to a value obtained by offsetting said first signal transmit power by the
   difference found in said calculation step,

   whereby if said received signal to noise ratio is above a threshold said setting step decreases the transmit power of the forward link signal, and if said received signal to noise ratio is below the threshold said setting step increases the transmit power of the forward link signal.

2. The method of claim 1, wherein said method is performed during a traffic initialization period between said base station and said mobile device.

3. The method of claim 1 or 2, wherein said forward link signal is a preamble sent from said base station to said mobile device.

4. The method of any one of claims 1 to 3, wherein said first signal is a pilot signal.

5. The method of any one of claims 1 to 4, wherein the step of sending said second signal is performed over an access channel in the communications network.

6. The method of any one of claims 1 to 5, wherein said desired signal component value is a pre-optimized preamble energy per chip to the interference density Ec/lo value.

7. The method of any one of claims 1 to 5, wherein the desired signal component value is determined based on said mobile device.

8. The method of claim 7, wherein the desired signal component value is reported to said base station during said sending said second signal step.

9. The method of claim 7 or claim 8, wherein the desired signal component value is limited by a threshold value, whereby if said component value based on said mobile device exceeds said threshold value, said desired signal component value is set to said threshold value.

10. The method of any one of claims 1 to 5, wherein the desired signal component value is selected from a predetermined value at said base station and a value received from said mobile device.

11. The method of claim 10, wherein said selecting is performed based on the higher value between said predetermined value at said base station and said value received from said mobile device.

12. The method of claim 11, wherein said selecting is limited by a threshold value, whereby if said value received from said mobile device exceeds said threshold value, said selecting step uses said threshold value.

13. The method of any of claims 1 to 12, wherein said setting step further comprises adding an offset value to the transmit power of said forward link signal.

14. The method of claim 13, wherein said offset is from 0 to 6 dB.

15. The method of any of claims 1 to 14, wherein said estimated signal component value is an estimated energy per chip to the interference density, Ec/lo value of said first signal.

16. The method of any of claims 1 to 15, wherein said communications network is a CDMA network.

17. A system for controlling transmit power of a forward link signal in a communications network, said system comprising:

a mobile device (30), said mobile device adapted to:

receive (32) first signal from a base station;
evaluate (34) a signal to noise ratio of said first signal; and
transmit (36) information about said received signal to noise ratio to said base station; and

said base station (10), said base station being adapted to:

send (46) said first signal with a first signal transmit power;
receive (40) said information about the received signal to noise ratio from said mobile device; said base station being **characterized in that** it is adapted to

set (42) the transmit power of said forward link signal based on said information about said received signal to noise ratio and said first signal transmit power, the setting comprising:

estimating a value of a signal component of said first signal based on said information about the received signal to noise ratio;
determining a desired value for said signal component; and
setting the transmit power of said forward link signal by adding the difference between the desired signal component value and the estimated signal component value to the first signal transmit power,

whereby if said signal to noise ratio is above a threshold said base station decreases the transmit power of said forward link signal, and if said signal to noise ratio is below the threshold the base station increases the transmit power of said forward link signal.

18. The system of claim 17, wherein said first signal is a pilot signal.

19. The system of claim 17 or claim 18, wherein said mobile device is adapted to transmit information over an access channel.

20. The system of any one of claims 17 to 19, wherein said forward link signal is a preamble on a traffic channel sent from said base station to said mobile device.

21. The system of any one of claims 17 to 20, wherein said base station is arranged to set the transmit power during a traffic initialization period between said base station and said mobile device.

22. The system of any of claims 17 to 21 wherein said evaluating of said first signal in said mobile device is performed on a first signal component.

23. The system of claim 22, wherein the first signal component is the energy per chip to the interference density, Ec/Io, of the first signal.

24. The system of any one of claims 17 to 23, wherein said system is arranged to determine said desired signal component value based on a pre-optimized preamble energy per chip to the interference density Ec/Io value.

25. The system of any one of claims 17 to 23, wherein said system is arranged to determine said desired signal component value based on said mobile device.

26. The system of claim 25, wherein said mobile device is arranged to report said desired signal component value to said base station during said transmitting of information step.

27. The system of claim 25 or claim 26, wherein the system is arranged to limit the desired signal component value by a threshold value, whereby if said value based on said mobile device exceeds said threshold value, said desired signal component value is set to said threshold value.

28. The system of any one of claims 17 to 23, wherein the system is arranged to select the desired signal component value from a predetermined value at said base station and a value received from said mobile device.

29. The system of claim 28, wherein said system is arranged to select a higher value between said predetermined value at said base station and said value received from said mobile device.

30. The system of claim 29, wherein said system is arranged to use a threshold to select said value, whereby if said value received from said mobile device exceeds said threshold value, said system uses said threshold value.

31. The system of any one of claims 17 to 29 wherein system is arranged to add an offset parameter to the transmit power of said forward link signal.

32. The system of claim 31, wherein the system is arranged to add a value of offset parameter of from 0 to 6 dB.

33. The system of any of claims 17 to 32 wherein said communications network is a CDMA network.

**Patentansprüche**

1. Verfahren zur Steuerung der Sendeleistung eines Vorwärtsverbindungssignals zwischen einer Basisstation (10) und einem Mobilgerät (30) in einem Kommunikationsnetz, wobei das Verfahren folgende Schritte umfasst:

   Sendung (12) eines ersten Signals von der Basisstation an das Mobilgerät, wobei das erste Signal eine erste Signalsendeleistung hat;
   Empfang (16) des ersten Signals am Mobilgerät;
   Messung (17) eines empfangenen Signal-Rausch-Verhältnisses für das erste Signal am Mobilgerät;
   Sendung (18) eines zweiten Signals vom Mobilgerät an die Basisstation, wobei das zweite Signal Information über das empfangene Signal-Rausch-Verhältnis enthält; wobei das Verfahren wie folgt **gekennzeichnet** ist:

Einstellung (22) der Sendeleistung des Vorwärtsverbindungssignals auf der Basis der empfangenen Signal-Rausch-Verhältnis-Information und der ersten Signalsendeleistung, wobei der Einstellschritt außerdem Folgendes umfasst:

Schätzung eines Werts der Signalkomponente auf der Basis des empfangenen Signal-Rausch-Verhältnisses;
Berechnung der Differenz zwischen einem Sollwert der Signalkomponente und dem geschätzten Wert der Signalkomponente; und
Zuordnung der Sendeleistung des Vorwärtsverbindungssignals zu einem Wert, der **dadurch** erhalten wird, dass die erste Signalsendeleistung durch die im Berechnungsschritt gefundene Differenz korrigiert wird,

wodurch, wenn das empfangene Signal-Rausch-Verhältnis über einem Schwellwert liegt, der Einstellschritt die Sendeleistung des Vorwärtsverbindungssignals vermindert, und wenn das empfangene Signal-Rausch-Verhältnis unter dem Schwellwert liegt, der Einstellschritt die Sendeleistung des Vorwärtsverbindungssignals erhöht.

2. Verfahren nach Anspruch 1, wobei das Verfahren während einer Verkehrsinitialisierungsperiode zwischen der Basisstation und dem Mobilgerät ausgeführt wird.

3. Verfahren nach Anspruch 1 oder 2, wobei das Vorwärtsverbindungssignal eine von der Basisstation an das Mobilgerät gesendete Präambel ist.

4. Verfahren nach einem der Ansprüche 1 bis 3, wobei das erste Signal ein Pilotsignal ist.

5. Verfahren nach einem der Ansprüche 1 bis 4, wobei der Schritt der Sendung des zweiten Signals über einen Zugangskanal im Kommunikationsnetz erfolgt.

6. Verfahren nach einem der Ansprüche 1 bis 5, wobei der Sollwert der Signalkomponente ein Verhältniswert Ec/Io einer voroptimierten Präambelenergie pro Chip zur Störungsdichte ist.

7. Verfahren nach einem der Ansprüche 1 bis 5, wobei der Sollwert der Signalkomponente auf der Basis des Mobilgeräts bestimmt wird.

8. Verfahren nach Anspruch 7, wobei der Sollwert der Signalkomponente beim Senden des zweiten Signalschritts der Basisstation gemeldet wird.

9. Verfahren nach Anspruch 7 oder Anspruch 8, wobei der Sollwert der Signalkomponente durch einen Schwellwert begrenzt ist, wodurch, wenn der auf dem Mobilgerät basierende Wert der Komponente den Schwellwert übersteigt, der Sollwert der Signalkomponente auf den Schwellwert eingestellt wird.

10. Verfahren nach einem der Ansprüche 1 bis 5, wobei der Sollwert der Signalkomponente aus einem vorbestimmten Wert an der Basisstation und einem vom Mobilgerät empfangenen Wert ausgewählt wird.

11. Verfahren nach Anspruch 10, wobei die Auswahl darauf basiert, den höheren Wert zwischen dem vorbestimmten Wert an der Basisstation und dem vom Mobilgerät empfangenen Wert auszuwählen.

12. Verfahren nach Anspruch 11, wobei die Auswahl durch einen Schwellwert begrenzt ist, wodurch, wenn der vom Mobilgerät empfangene Wert den Schwellwert übersteigt, der Auswahlschritt den Schwellwert benutzt.

13. Verfahren nach einem der Ansprüche 1 bis 12, wobei der Einstellschritt außerdem die Addition eines Korrekturwerts zur Sendeleistung des Vorwärtsverbindungssignals umfasst.

14. Verfahren nach Anspruch 13, wobei die Korrektur im Bereich von 0 bis 6 dB liegt.

15. Verfahren nach einem der Ansprüche 1 bis 14, wobei der geschätzte Wert der Signalkomponente ein Verhältniswert Ec/Io einer geschätzten Energie pro Chip zur Störungsdichte des ersten Signals ist.

16. Verfahren nach einem der Ansprüche 1 bis 15, wobei das Kommunikationsnetz ein CDMA-Netz ist.

**17.** System zur Steuerung der Sendeleistung eines Vorwärtsverbindungssignals in einem Kommunikationsnetz, wobei das System Folgendes umfasst:

ein Mobilgerät (30), wobei das Mobilgerät zu Folgendem angepasst ist:

Empfang (32) eines ersten Signals von einer Basisstation;
Berechnung (34) eines Signal-Rausch-Verhältnisses des ersten Signals; und
Sendung (36) der Information über das empfangene Signal-Rausch-Verhältnis an die Basisstation; und

die Basisstation (10), wobei die Basisstation zu Folgendem angepasst ist:

Sendung (46) des ersten Signals mit einer ersten Signalsendeleistung;
Empfang (40) der Information über das empfangene Signal-Rausch-Verhältnis vom Mobilgerät; wobei die Basisstation **dadurch gekennzeichnet ist, dass** sie zu Folgendem angepasst ist:

Einstellung (42) der Sendeleistung des Vorwärtsverbindungssignals auf der Basis der empfangenen Signal-Rausch-Verhältnis-Information und der ersten Signalsendeleistung, wobei die Einstellung Folgendes umfasst:

Schätzung eines Werts einer Signalkomponente des ersten Signals auf der Basis der Information über das empfangene Signal-Rausch-Verhältnis;
Bestimmung eines Sollwerts für die Signalkomponente; und
Einstellung der Sendeleistung des Vorwärtsverbindungssignals durch Addition der Differenz zwischen dem Sollwert der Signalkomponente und dem geschätzten Wert der Signalkomponente zur ersten Signalsendeleistung,

wodurch, wenn das Signal-Rausch-Verhältnis über einem Schwellwert liegt, die Basisstation die Sendeleistung des Vorwärtsverbindungssignals vermindert, und wenn das Signal-Rausch-Verhältnis unter dem Schwellwert liegt, die Basisstation die Sendeleistung des Vorwärtsverbindungssignals erhöht.

**18.** System nach Anspruch 17, wobei das erste Signal ein Pilotsignal ist.

**19.** System nach Anspruch 17 oder Anspruch 18, wobei das Mobilgerät dazu angepasst ist, Information über einen Zugangskanal zu senden.

**20.** System nach einem der Ansprüche 17 bis 19, wobei das Vorwärtsverbindungssignal eine Präambel auf einem Verkehrskanal ist, die von der Basisstation an das Mobilgerät gesendet wird.

**21.** System nach einem der Ansprüche 17 bis 20, wobei die Basisstation dazu angeordnet ist, die Sendeleistung während einer Verkehrsinitialisierungsperiode zwischen der Basisstation und dem Mobilgerät einzustellen.

**22.** System nach einem der Ansprüche 17 bis 21, wobei die Berechnung des ersten Signals im Mobilgerät auf einer ersten Signalkomponente durchgeführt ist.

**23.** System nach Anspruch 22, wobei die erste Signalkomponente das Verhältnis Ec/lo der Energie pro Chip zur Störungsdichte des ersten Signals ist.

**24.** System nach einem der Ansprüche 17 bis 23, wobei das System dazu angeordnet ist, den Sollwert der Signalkomponente auf der Basis eines Verhältniswerts Ec/lo der voroptimierten Präambelenergie pro Chip zur Störungsdichte zu bestimmen.

**25.** System nach einem der Ansprüche 17 bis 23, wobei das System dazu angeordnet ist, den Sollwert der Signalkomponente auf der Basis des Mobilgeräts zu bestimmen.

**26.** System nach Anspruch 25, wobei das Mobilgerät dazu angeordnet ist, den Sollwert der Signalkomponente während der Sendung des Informationsschritts an die Basisstation zu melden.

**27.** System nach Anspruch 25 oder Anspruch 26, wobei das System dazu angeordnet ist, den Sollwert der Signalkomponente durch einen Schwellwert zu begrenzen, wodurch, wenn der auf dem Mobilgerät basierende Wert den Schwellwert übersteigt, der Sollwert der Signalkomponente auf den Schwellwert eingestellt wird.

28. System nach einem der Ansprüche 17 bis 23, wobei das System dazu angeordnet ist, den Sollwert der Signalkomponente aus einem vorbestimmten Wert an der Basisstation und einem vom Mobilgerät empfangenen Wert auszuwählen.

29. System nach Anspruch 28, wobei das System dazu angeordnet ist, einen höheren Wert zwischen dem vorbestimmten Wert an der Basisstation und dem vom Mobilgerät empfangenen Wert auszuwählen.

30. System nach Anspruch 29, wobei das System dazu angeordnet ist, zur Auswahl des Werts einen Schwellwert zu benutzen, wodurch, wenn der vom Mobilgerät empfangene Wert den Schwellwert übersteigt, das System den Schwellwert benutzt.

31. System nach einem der Ansprüche 17 bis 29, wobei das System dazu angeordnet ist, einen Korrekturparameter zur Sendeleistung des Vorwärtsverbindungssignals zu addieren.

32. System nach Anspruch 31, wobei das System dazu angeordnet ist, einen Wert des Korrekturparameters zu addieren, der im Bereich von 0 bis 6 dB liegt.

33. System nach einem der Ansprüche 17 bis 32, wobei das Kommunikationsnetz ein CDMA-Netz ist.

## Revendications

1. Procédé de contrôle de la puissance d'émission d'un signal de liaison en aval entre une station de base (10) et un dispositif mobile (30) dans un réseau de communications, le procédé consistant à:

   envoyer (12) un premier signal de la station de base vers le dispositif mobile, ledit premier signal présentant une première puissance d'émission de signal;
   recevoir (16) ledit premier signal sur le dispositif mobile;
   mesurer (17) le premier signal pour un rapport signal sur bruit reçu sur le dispositif mobile;
   envoyer (18) un second signal du dispositif mobile vers la station de base, ledit second signal contenant des informations sur ledit rapport signal sur bruit reçu; ledit procédé étant **caractérisé par**

   le réglage (22) de la puissance d'émission du signal de liaison en aval en fonction desdites informations sur le rapport signal sur bruit reçu et de ladite première puissance d'émission de signal, l'étape de réglage comprenant en outre:

   l'estimation d'une valeur d'un composant du signal en fonction dudit rapport signal sur bruit reçu;
   le calcul de la différence entre une valeur souhaitée d'un composant du signal et ladite estimation de la valeur d'un composant du signal; et
   l'attribution de la puissance d'émission dudit signal de liaison en aval à une valeur obtenue par le décalage de ladite première puissance d'émission de signal de la différence obtenue dans ladite étape de calcul,

   par lequel si ledit rapport signal sur bruit reçu est supérieur à un seuil ladite étape de réglage réduit la puissance d'émission du signal de liaison en aval, et si ledit rapport signal sur bruit reçu est inférieur au seuil ladite étape de réglage accroît la puissance d'émission du signal de liaison en aval.

2. Procédé de la revendication 1, dans lequel ledit procédé est effectué au cours d'une période d'initialisation du trafic entre ladite station de base et ledit dispositif mobile.

3. Procédé de la revendication 1 ou 2, dans lequel ledit signal de liaison en aval est un préambule envoyé par ladite station de base audit dispositif mobile.

4. Procédé de l'une quelconque des revendications 1 à 3, dans lequel ledit premier signal est un signal pilote.

**5.** Procédé de l'une quelconque des revendications 1 à 4, dans lequel l'étape d'envoi dudit second signal est effectuée sur un canal d'accès dans le réseau de communications.

**6.** Procédé de l'une quelconque des revendications 1 à 5, dans lequel ladite valeur de composant du signal souhaitée est une valeur préoptimisée de préambule du rapport de l'énergie par chip sur la densité d'interférence Ec/Io.

**7.** Procédé de l'une quelconque des revendications 1 à 5, dans lequel la valeur de composant du signal souhaitée est déterminée en fonction dudit dispositif mobile.

**8.** Procédé de la revendication 7, dans lequel la valeur de composant du signal souhaitée est transmise à ladite station de base au cours de ladite étape d'envoi dudit second signal.

**9.** Procédé de la revendication 7 ou de la revendication 8, dans lequel la valeur de composant du signal souhaitée est limitée par une valeur seuil, par laquelle si ladite valeur de composant du signal basée sur ledit dispositif mobile excède ladite valeur seuil, ladite valeur de composant du signal souhaitée est fixée à ladite valeur seuil.

**10.** Procédé de l'une quelconque des revendications 1 à 5, dans lequel la valeur de composant du signal souhaitée est sélectionnée à partir d'une valeur prédéterminée à ladite station de base et d'une valeur reçue dudit dispositif mobile.

**11.** Procédé de la revendication 10, dans lequel ladite sélection est effectuée en fonction de la valeur plus élevée entre ladite valeur prédéterminée à ladite station de base et ladite valeur reçue dudit dispositif mobile.

**12.** Procédé de la revendication 11, dans lequel ladite sélection est limitée par une valeur seuil, par laquelle si ladite valeur reçue dudit dispositif mobile excède ladite valeur seuil, ladite étape de sélection utilise ladite valeur seuil.

**13.** Procédé de l'une quelconque des revendications 1 à 12, dans lequel ladite étape de réglage comprend en outre l'ajout d'une valeur de décalage à la puissance d'émission dudit signal de liaison en aval.

**14.** Procédé de la revendication 13, dans lequel ledit décalage varie de 0 à 6 dB.

**15.** Procédé de l'une quelconque des revendications 1 à 14, dans lequel ladite valeur estimée de composant du signal est une valeur estimée du rapport de l'énergie par chip sur la densité d'interférence Ec/Io dudit premier signal.

**16.** Procédé de l'une quelconque des revendications 1 à 15, dans lequel ledit réseau de communications est un réseau CDMA.

**17.** Système pour contrôler la puissance d'émission d'un signal de liaison en aval dans un réseau de communications, ledit système comprenant:

un dispositif mobile (30) ledit dispositif mobile étant adapté pour:

recevoir (32) un premier signal provenant d'une station de base;
évaluer (34) un rapport signal sur bruit dudit premier signal;et
transmettre (36) les informations sur ledit rapport signal sur bruit reçu à ladite station de base; et

ladite station de base (10), ladite station de base étant adaptée pour:

envoyer (46) ledit premier signal avec une première puissance d'émission du signal;
recevoir (40) lesdites informations sur le rapport signal sur bruit reçu en provenance dudit dispositif mobile;
ladite station de base étant **caractérisée en ce qu'**elle est adaptée pour
régler (42) la puissance d'émission dudit signal de liaison en aval en fonction desdites informations sur ledit rapport signal sur bruit reçu et de ladite première puissance d'émission de signal, le réglage comprenant:

l'estimation d'une valeur d'un composant dudit premier signal en fonction desdites informations sur le rapport signal sur bruit reçu;
la détermination d'une valeur souhaitée pour ledit composant du signal; et
le réglage de la puissance d'émission dudit signal de liaison en aval par l'ajout de la différence entre la valeur souhaitée du composant du signal et la valeur estimée du composant du signal à la première puissance d'émission du signal,

par laquelle si ledit rapport signal sur bruit est supérieur à un seuil ladite station de base réduit la puissance d'émission dudit signal de liaison en aval, et si ledit rapport signal sur bruit est inférieur au seuil la station de base accroît la puissance d'émission dudit signal de liaison en aval.

18. Système de la revendication 17, dans lequel ledit premier signal est un signal pilote.

19. Système de la revendication 17 ou 18, dans lequel ledit dispositif mobile est adapté pour transmettre des informations sur un canal d'accès.

20. Système de l'une quelconque des revendications 17 à 19, dans lequel ledit signal de liaison en aval est un préambule sur un canal de trafic envoyé de ladite station de base audit dispositif mobile.

21. Système de l'une quelconque des revendications 17 à 20, dans lequel ladite station de base est agencée pour régler la puissance d'émission au cours d'une période d'initialisation du trafic entre ladite station de base et ledit dispositif mobile.

22. Système de l'une quelconque des revendications 17 à 21, dans lequel ladite évaluation du premier signal dans le dispositif mobile est effectué sur un premier composant du signal.

23. Système de la revendication 22, dans lequel le premier composant du signal est le rapport de l'énergie par chip sur la densité d'interférence Ec/lo du premier signal.

24. Système de l'une quelconque des revendications 17 à 23, dans lequel ledit système est agencé pour déterminer ladite valeur de composant du signal souhaitée en fonction d'une valeur préoptimisée de préambule du rapport de l'énergie par chip sur la densité d'interférence Ec/lo.

25. Système de l'une quelconque des revendications 17 à 23, dans lequel ledit système est agencé pour déterminer ladite valeur de composant du signal souhaitée en fonction dudit dispositif mobile.

26. Système de la revendication 25, dans lequel ledit dispositif mobile est agencé pour transmettre ladite valeur de composant du signal souhaitée à ladite station de base au cours de ladite étape de transmission d'informations.

27. Système de la revendication 25 ou de la revendication 26, dans lequel le système est agencé pour limiter la valeur de composant du signal souhaitée par une valeur seuil, par laquelle si ladite valeur basée sur ledit dispositif mobile excède ladite valeur seuil, ladite valeur de composant du signal souhaitée est fixée à ladite valeur seuil.

28. Système de l'une quelconque des revendications 17 à 23, dans lequel le système est agencé pour sélectionner la valeur de composant du signal souhaitée à partir d'une valeur prédéterminée sur ladite station de base et d'une valeur reçue en provenance dudit dispositif mobile.

29. Système de la revendication 28, dans lequel ledit système est agencé pour sélectionner une valeur la plus élevée entre ladite valeur prédéterminée sur ladite station de base et ladite valeur reçue en provenance dudit dispositif mobile.

30. Système de la revendication 29, dans lequel ledit système est agencé pour utiliser un seuil pour sélectionner ladite valeur, par lequel si ladite valeur reçue en provenance dudit dispositif mobile excède ladite valeur seuil, ledit système utilise ladite valeur seuil.

31. Système de l'une quelconque des revendications 17 à 29 dans lequel le système est agencé pour ajouter un paramètre de décalage à la puissance d'émission dudit signal de liaison en aval.

32. Système de la revendication 31, dans lequel le système est agencé pour ajouter une valeur de paramètre de décalage allant de 0 à 6 dB.

33. Système de l'une quelconque des revendications 17 à 32 dans lequel ledit réseau de communications est un réseau CDMA.

FIG. 1

FIG. 2